# EUROPEAN PATENT APPLICATION

(11) **EP 3 113 075 A1**
(43) Date of publication of application: **04.01.2017**
(21) Application number: 15306043.9
(22) Date of filing: 30.06.2015
(51) Int. Cl.: G06K 9/46, G06K 9/62

(54) **METHOD AND APPARATUS FOR FINDING A MATCHING IMAGE IN A SET OF GIVEN IMAGES**

(71) Applicant: Thomson Licensing, 92130 Issy-les-Moulineaux (FR)
(72) Inventor: Winter, Marco, 30659 Hannover (DE); Theis, Oliver, 32689 Kalletal (DE); Brune, Thomas, 30449 Hannover (DE)

(57) **Abstract**

An apparatus **(2)** and a method for finding, from among a set of given images, a most similar given image compared to a workpiece image, the method comprising: inputting **(10)** the given images and the workpiece image; calculating a horizontal 1D projection and a vertical 1D projection from each of the given images, storing the 1D projections in a database, calculating a horizontal 1D projection and a vertical 1D projection from the workpiece image, calculating a similarity measure for each given image from comparing the horizontal projection of the workpiece image to the horizontal projection of the each given image and comparing the vertical projection of the workpiece image to the vertical projection of the each given image, and selecting as the the most similar image that one of the given images that has the highest similarity measure.

## Description

### Technical Field

The invention relates to a method of finding, from among a set of given images, a most similar given image compared to a workpiece image. Furthermore, the invention relates to an apparatus for performing this method.

### Background

Image identification and image comparison could be aided by embedding identification data into the images, e.g. by known watermarking techniques. Images with watermark embedded identification data can enable to counteract counterfeiting and intellectual property rights violations.

However, watermarking of images inevitably changes the image content. This is particularly undesired by the creative community, who dislike automatic processes changing the content of their work. Furthermore, there is no guarantee, that the watermark in the image or video remains completely invisible. This especially applies to automatic watermarking processes.

The only remaining alternative for the creative community to find their own work, for example in an image stock suspected to contain unauthorized copies or counterfeit pieces of art, is to search the images by hand in the original references. This is, however, a rather time consuming and therefore expensive process.

It is furthermore desirable to find, in an image or video database, the origin of workpiece images that either are known to have been manipulated or that might have been manipulated. Such workpiece images can be single images or entire workpiece image sequences or sub-sequences. The finding method should thus take into account that the workpiece image may have been manipulated, for example to fit to a certain video standard; or that it may have undergone postproduction steps such as cutting, color grading, resizing or the like.

Even if the master data, which means the original takes captured during movie making, are available, finding the corresponding take or sequence of images, for example for the purpose of re-editing video data, is a rather time consuming process.

Therefore, it is an object of the invention to provide a fast and reliable method and apparatus for finding, from among a set of given images, a most similar given image compared to a workpiece image.

### Invention

The object is solved by a method comprising the steps of:
- Inputting the given images;
- Calculating a horizontal 1D projection and a vertical 1D projection from each of the inputted given images;
- Storing the 1D projections;
- Inputting the workpiece image;
- Calculating a horizontal and a vertical 1D projection from the inputted workpiece image;
- Calculating a similarity measure for each given image from comparing the horizontal projection of the workpiece image to the horizontal projection of the each given image and from comparing the vertical projection of the workpiece image to the vertical projection of the each given image; and
- Selecting as the most similar given image that one of the set of given images that has the highest similarity measure.

The invention is based on the following considerations. Holders of intellectual property rights, in particular copyright holders, seek for a method of finding the origin of a workpiece image in a database of given images. The finding method is desired to be robust against a certain range and degree of manipulation of the workpiece image. It has to be tolerant against typical manipulations, such as down- or up-scaling of the image with respect to image dimensions width, height and/or color depth. Furthermore, manipulations such as color grading, aspect ratio changes and cropping should be tolerated. The desired result of the method is to be able to identify one single exactly matching image or a few potential candidate images representing the best matches. Detection shall be performed automatically to speed up the search process.

Furthermore, a specific take or specific image within this take shall be identified in a database comprising a plurality of takes, which have been for example recorded during movie production. This is for example of particular interest in video post-production or re-editing. The takes themselves may also have been generated in an evolutionary sequence of postperocessing steps like color grading, vfx, etc., and may have been stored in the same database as different versions of the same content (grouping). In such cases hits for each version/group may be indicated. So, even the processing history of an image may become visible.

The concept according to the invention can be considered as consisting of two parts.

The first part is the generation of a database suited for checking, whether a workpiece image has its origin in the image sequences represented by the database and, if so, from which sequence and which image within the sequence it was derived.

The second part is the actual image query or search or comparison itself. This is the process of searching in the database to find a best match for a specific workpiece image. The result of the image query is the indication of one specific take and one specific image or image index within this take.

The database needs to be as small as possible to stay portable. On the other hand, the query should produce meaningful results as much as possible. For a maximally meaningful image comparison, a 2D cross correlation of a query image and a given image would be best. On the other hand, for this, the database would need to store the whole images. That would slow down the search process due to the multiple much stronger CPU performance requirements of a 2D cross correlation and would require dramatically large databases to store the many pictures.

The invention takes care of these conflicting requirements in a combined approach. For this purpose, the workpiece image is analyzed. The analysis comprises the following steps: The workpiece image is inputted. Then, a horizontal summation of the inputted workpiece image pixels is performed. The summation is performed in horizontal direction, which means along the individual rows of the image. This results in a 1-dimensional projection denoted as horizontal projection in the following, being a vector having one component for each row of the inputted workpiece image, i.e. as many components as the vertical resolution or vertical size of the inputted workpiece image.

In another step, a vertical summation of the pixels of the inputted workpiece image is performed. In this step, the pixel values are summed up separately within each column of the image. This results in another 1-dimensional projection, denoted as vertical projection in the following, being a vector having one component for each column of the inputted workpiece image, i.e. as many components as the horizontal resolution or size of the inputted workpiece image.

For both kinds of projection, without loss of generality, averaging instead of summing may sometimes be preferable.

A same kind of horizontal and vertical summation or averaging is also performed for the images in the set of given images, or for each image in a given image sequence. The horizontal and vertical projections are then stored in a database, together with information for accessing the image or images they were calculated from.

For identifying the origin of the workpiece image among the images in the given set of images, the horizontal and vertical projections in the database are compared with the horizontal and vertical projections of the workpiece image.

Comparing two one-dimensional projections can for example be performed by cross-correlating them. This comprises determining the maximum cross correlation magnitude, and determining an offset or shift at which the maximum cross correlation magnitude occurs. In doing this, the maximum magnitude of the cross correlation is used as similarity criterion, and the offset may provide some information about the processing that lead from one sequence to the other.

For a projection-based comparison of two two-dimensional images each characterized by two 1D projections, the same approach is equivalent to varying a horizontal offset such as to maximize the cross-correlation between the two vertical projections, and varying a vertical offset such as to maximize the cross-correlation between the two horizontal projections. As the similarity criterion between the two images, e.g. the sum of the two maximum cross-correlation magnitudes can easily be calculated and used.

It must be noted that cross-correlating the two horizontal projections by varying the vertical shift between them, is completely independent of the horizontal shift that is used for cross-correlating the two vertical projections, and vice versa. Therefore, the order between the two cross-correlation operations is arbitrary and does not influence the overall result.

The described similarity criterion is calculated between the workpiece image on one side and each given image on the other side. The given image yielding the similarity criterion of all is identified as the matching image. Alternatively, if the given images are known to constitute and be grouped into several versions of an original material, it may be preferable to identify one matching image within each group.

Each cross-correlation calculation yields a maximum magnitude and an offset or shift at which this maximum magnitude occurs. So a comparison of two images based on cross-correlating their horizontal and vertical 1D projections will yield a maximum magnitude - for example the sum of the maximum magnitude of the cross-correlation of the horizontal projections and the maximum magnitude of the cross-correlation of the vertical projections - as well as a horizontal offset and a vertical offset at which the sum of magnitudes is maximum.

If the set of given images comprizes several given image sequences known to be intermediate results of a workflow, it is proposed to separately find the matching image in each given image sequence and to present these matching images to a user as candidates, from which a workflow-aware user can select one.

Advantageously, the finding method of this disclosure reduces the user search effort to a small fraction by automatically excluding unrelated images and presenting just the potential candidates to the user. This is particularly useful in movie post processing, which thereby is speeded up significantly.

In an advantageous embodiment of the invention, inputting the images comprises resizing them to a predefined spatial dimension if they have varying spatial dimension. For example, the images may be categorically resized or scaled or interpolated to a spatial dimension of 1920 x 1080 pixels.

In another advantageous embodiment of the invention, the calculation of the 1D projections is performed based on a luminance value of the pixels in the given images and in the workpiece image.

In particular, the step of comparing the 1D projections of the workpiece image to the 1D projections of the given images is performed based on cross-correlation criteria. Advantageously, this renders the search invariant against translation or shift of image content, as it may occur in some kinds of postprocessing.

The method is further enhanced in that the step of comparing comprises comparing the horizontal and the vertical 1D projections and the step of selecting comprises finding a maximum of the best matches for the horizontal and vertical 1D projection, based on the cross-correlation criteria. In other words, this match is determined taking into consideration the match between the horizontal and the match between the vertical 1D projections of a respective one of the given images and the workpiece image. For example, the sum or the average value of the maximum magnitude of the cross-correlation of the horizontal projections and the maximum magnitude of the cross-correlation of the vertical projections is taken into consideration.

According to another advantageous aspect of the invention, for each of the 1D projections, an average of the values of the projection is calculated and is then subtracted from the values of the 1D projection. By subtracting an average value, unnecessary offsets between the compared 1D projections are omitted, thereby increasing the processing speed.

In still another advantageous aspect of the invention, the 1D projections are stored in a database, wherein, for each pair of horizontal and vertical 1D projections, the database further includes a link or pointer to the image from which the 1D projections have been calculated. This reduces the volume of the database to a reasonable size, thereby enhancing the portability of the database. In comparison to a situation, in which the entire image information of the given images is stored in a database, a significant reduction of the amount of data is achieved and the database can be searched much faster.

According to further advantageous aspects of the invention, the method is enhanced by using context information of the given images, in particular if the given images form part of a video.

In an advantageous embodiment of the invention, if the given images are from a motion picture video and if information about static scenes within the video is available, images of each static scene - which will differ only by noise - can be represented by one single representative image that can either be suitably selected from among the images of the static scene or derived therefrom. By that approach, repetitive calculations or analyses are avoided in situations where the outcome of image to image comparisons is known to be less distinctive. This can contribute to accelerate the overall method.

To implement this, a single pair of projections comprising one horizontal and one vertical 1D projection can either be calculated from the representative image, or can be derived from the images of the static scene e.g. by averaging.
The pair of projections is then stored in the database together with a link to the representative image. Comparing projections is then only performed for the representative images, while comparisons of the workpiece image with the images of the static scene other than the representative image are skipped or avoided. Within the context of this specification, an image sequence shall be considered as a static scene if the images of the sequence are almost identical to each other. For example, if the sum of square or absolute luminance differences between co-located pixels of the images is below a certain threshold.

The embodiment is advantageously enhanced in a context where for the workpiece image as well as for all image sequences in the database, boundary images of static scenes are either known or can be identified. Assume that a given workpiece image is an image within a workpiece static scene. If for such a workpiece image an image from a given static scene has been found as best match, the exact image position within the given static scene can be further refined as follows: Knowing the relative position of the workpiece image within the workpiece static scene, that image of the given static scene is selected as a refined match, which has a same or corresponding relative position within the static scene. This advantageously enables that an unambiguous allocation between the workpiece image and one of the given images, in particular an image in a static scene, is made, even in cases where image content alone does not allow such allocation in a reliable way.

Furthermore, the method of finding a best matching image is further enhanced in cases of slowly changing scene content. Instead of just comparing the projections of the workpiece image to the projections of one single given image at a time,
- the workpiece image is extended into a short image sequence by additionally comprising a few preceding and/or subsequent consecutive images of the workpiece sequence,
- the one single given image is extended into a short image sequence by additionally comprising the same number of preceding and/or subsequent consecutive images of the given sequence, and
- the comparison and similarity criterion is derived by summing up cross correlation values from an image-by-image comparison of the two short image sequences, and
- a best match is identified by finding a maximum value of that sum.

Advantageously, this enables that also in a situation where the images of the video do not represent a static scene but a slightly or slowly changing scene, a best match can more confidently be identified.

In these situations, a plurality of images can be provided to the user for him to manually locate the best match therefrom. Furthermore, in another advantageous aspect of the invention, only one of the images considered can be output, for example a center image of the considered short sequences.

The object of the invention is further solved by an apparatus for finding, in a set of given images, a most similar one of the given images compared to a workpiece image, the apparatus comprising:
- an image inputting unit equipped and configured for inputting given images and a workpiece image;
- a processing unit equipped and configured to calculate a horizontal and a vertical 1D projection from each of the inputted given images and from the inputted workpiece image;
- a database equipped and configured for storing the horizontal and the vertical 1D projections of the given images; the apparatus **characterized** in that
- the processing unit is further equipped and configured
   - to compare the horizontal projection of the workpiece image to the horizontal projections of the given images and to compare the vertical projection of the workpiece image to the vertical projections of the given images, and
   - based on the best match found in the two comparisons, to select the most similar one of the given images.

Same or similar advantages, which have been mentioned with respect to the method according to aspects of the invention, apply in a same or similar way also to the apparatus for finding a most similar one to the given images compared to a workpiece image, according to various embodiments of the invention. The apparatus is in particular configured to perform a method according to the various aspects of the invention.

Further characteristics of the invention will become apparent from the description of the embodiments according to the invention together with the claims and the drawings. Embodiments according to the invention can comprise individual characteristics or a combination of several characteristics.

### Brief Description of Drawings

The invention is described below in more detail based on exemplary embodiments, without restricting the general intent of the invention. Reference is made expressly to the drawings with regard to the disclosure of all details according to the invention that are not explained in greater detail in the description. The drawings show in:
- **FIG. 1**: a simplified flow chart illustrating a method of finding, in a set of given images, a most similar one of the given images compared to a workpiece image,
- **FIG. 2**: a simplified block diagram of an apparatus for performing this method,
- **FIG. 3**: a simplified scenario in which the method and apparatus are applicable and
- **FIG. 4**: a simplified diagram illustrating the operation of an apparatus for finding, in a set of given images, a most similar one of the given images compared to a workpiece image.

In the drawings, the same or similar types of elements or respectively corresponding parts are provided with the same reference numbers in order to prevent the item from needing to be reintroduced.

### Description of Embodiments

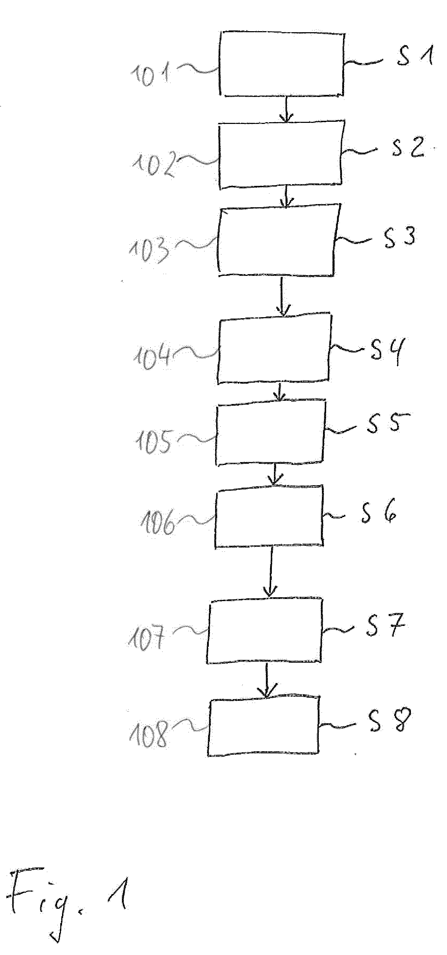

**FIG. 1** shows a simplified flow chart illustrating a method of finding, in a set of given images, a most similar one of the given images compared to a workpiece image. For example, the workpiece image is a manipulated or finished image, which has undergone the manipulations, for example to comply with the requirements of a certain data format. This, for example, applies to images of a video published in DVD format. Further manipulations can be cutting, color grading, resizing, color depth adaption, vfx, etc. In many real life situations no documentation or metadata is available that would allow to reassign or link the images of the DVD to the original takes and images from which they were derived. However, the master data, for example the video data of the original takes, often are available and it is now desirable to search for best matches to the workpiece image in this set of given images, i.e. in the images of the master video data or intermediate work results. The search shall be performed as exactly and as fast as possible.

To perform this search, firstly, in step **101,** the given images, for example the images of the master video data, are inputted.

In step **102,** the values of all pixels in each column of the inputted given images are added up, which means, a vertical projection of the inputted given image is calculated as a 1D vector. Furthermore, the values of all pixels in each row of the inputted given images are added up, which means, a horizontal projection of the inputted given image is calculated as another 1D vector.

Optionally, and not explicitly illustrated in **FIG. 1****,** an average value of each projection is calculated and that average value is then subtracted from each element of the projection. In other words, this converts the projections to a zero-mean form, which allows to simplify subsequent correlation calculations.

Further, in step **103,** the horizontal and vertical projections are stored in a database, together with links to the respective given image from which the projections have been derived. Advantageously, the images themselves are not stored in the database. The size of the database therefore remains reasonable, which enhances the portability of the database.

Together, steps **101** through **103** are performed in a data acquisition phase. They fill the database with a potentially large amount of projections data, against which subsequent best match searches can be performed.

Subsequent steps **104** to **106** are issued on the occasion of a best match query being launched. Basically, they repeat what has been performed on the given images, but now on the workpiece image.

In step **104,** the workpiece image is inputted. Furthermore, in step **105,** a horizontal and vertical projection of the inputted workpiece image is calculated. Same as in case of the given images, values of pixels are added up in each column for the vertical projection, and values of pixels are added up in each row for the horizontal projection. In step **106,** the horizontal and vertical projections of the inputted workpiece image are stored.

In step **107** then, the horizontal projection of the workpiece image is compared to the horizontal projections of the given images as stored in the database, and the vertical projection of the workpiece image is compared to the vertical projections of the given images as stored in the database.

Comparing projections instead of images, i.e. comparing 1D vectors instead of 2D pixel arrays, is advantageous. For checking image similarity in a way that is tolerant against image displacement, 2D cross correlation of the workpiece image and one given image would be the optimum solution. However, this is rather demanding with respect to processing time and storage needs. In the method according to aspects of the invention, it is 1D projection arrays that are being compared. Consequently, for each image pair to be compared, two 1D cross correlations are sufficient, which significantly accelerates the search process.

Finally, in step **108,** from the results of the cross-correlation calculations, that image of the given images whose horizontal and vertical projections are most similar to those of the workpiece image is outputted as the most similar image. As mentioned before, instead of outputting just a single, globally best match image, a group of best matching images can alternatively be output to a user, e.g. for him to do a final selection manually.

In particular, the method according to aspects of the invention is further enhanced for analysis of video data, wherein the given images, in this situation, are the images of a video. In particular, the video data comprises various takes, which means the video has not undergone post-production.

Firstly, information about a rate of change of the scene content is retrieved. This can be performed by analyzing the video images, or the information can for instance be retrieved from available metadata. For the images of a sequence representing a static scene, a single image of this particular sequence is assigned as a representative image of the scene. In other words, one single image of the static scene is selected. In this situation, the horizontal and vertical 1D projection is calculated for the representative image only. The remaining images of the sequence are neglected. Furthermore, as an alternative, a pair of 1D projections may be calculated from the images of the static scene and then linked to the representative image only. Again, the remaining images of the sequence are neglected. According to a further option, the step of comparing is only performed for the representative image, while the remaining images of the sequence are skipped. The above measures prevent that the search algorithm performs unnecessary calculations, i.e. unnecessary comparisons between 1D projections that differ only by a noise component. Since the scene is a static scene, its images comprise almost identical information, so that a repeated operation on these images is dispensable.

The method can be further enhanced in that boundary images of the static scene are identified. In other words, a first image, at which the static scene starts, and a second image, at which the static scene ends, are identified in the video data. If a best match is an image from within such a static scene, a relative distance of the workpiece image to the two boundary images is determined. Then that image of the static scene which has a similar relative distance to the boundary images is subsequently assigned as the best match to said workpiece image. In this way, advantageously, also for static scenes an unambiguous assignment of images is enabled.

Yet another advantageous embodiment of the invention arises in the case of slowly changing scenes. Again, this information can be derived from metadata or by analyzing the images of the video. In such a slowly changing sequence of video images, the step of comparing the projections of the workpiece image to the projections of one of the given images is performed by summing up maximum cross correlation magnitudes for a number of consecutive images in the sequences. A best match is identified by finding a maximum value of said sum. In other words, in the slowly varying scene case, a plurality of consecutive images from the workpiece sequence is matched against a same number of consecutive images from one of the given sequences.

One image of said plurality of consecutive images can be assigned as the best match to the workpiece image, for example the image in the middle of the plurality. Alternatively, the entire plurality of consecutive images can be displayed to the user for him to perform a final selection manually.

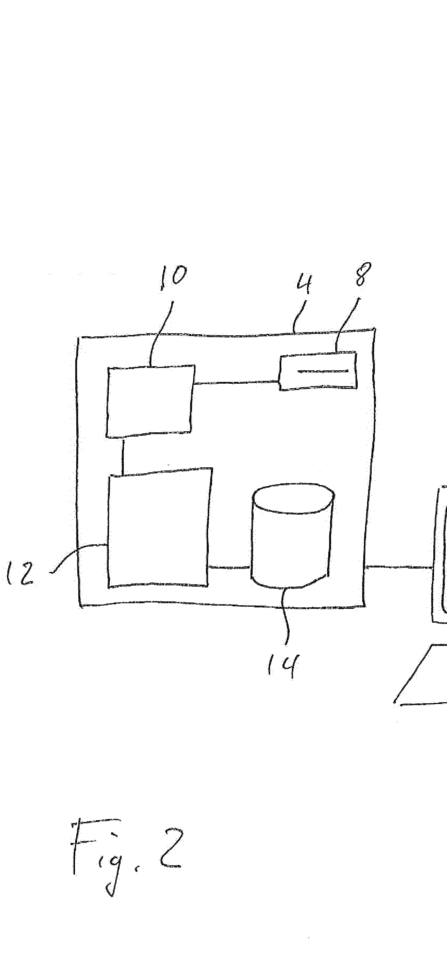

**FIG. 2** symbolically illustrates an apparatus **2** for finding, in a set of given images, a most similar one of the given images compared to a workpiece image. The apparatus **2** comprises a main unit **4** and a display unit **6.** For example, the main unit **4** is a computer or a workstation, while the display unit **6** is a suitable display being further connected to a user interface. The apparatus **2** is in particular configured as a video post-production workstation.

The main unit **4** further comprises an input unit **8,** for example a DVD or Blu-ray reader. The input unit **8** can be further configured to be coupled to, for example, a network for receiving a data stream as input. Furthermore, there is an inputting unit **10** which may comprise a size rectifying unit not individually shown, a processing unit **12** and a database **14.** These entities receive data from the input unit **8,** which in particular comprises the given images and the workpiece image. For example, the data provided by the input unit **8,** is on the one hand master video data and on the other hand the workpiece image.

The inputting unit **10** may be equipped and configured to rectify a size of the given images and of the workpiece image. In other words, the inpugtting unit **10** scales the given images and the workpiece image to a predetermined spatial dimension if they differ in spatial dimension.

The processing unit **12** is equipped and configured to calculate a horizontal and a vertical 1D projection from each of the inputted given images. The horizontal and vertical 1D projections are then stored in the database **14.**

Furthermore, the inputting unit **10** may be equipped and configured to rectify the size of the workpiece image by scaling it to the same spatial resolution as the given images. The processing unit **12** is further equipped and configured to calculate a horizontal and a vertical 1D projection from the size rectified workpiece image. Subsequently, the processing unit **12** compares the horizontal projection of the workpiece image against the horizontal projection of the given images. And the processing unit **12** compares the vertical projection of the workpiece image against the vertical projection of the given images. The most similar one of the given images is subsequently selected and assigned as a best match. In particular, the display unit **6** is equipped and configured to display this best match or the best matches to a user.

The apparatus **2,** in particular a postproduction workstation, is furthermore configured to perform the method, which was explained by making reference to **FIG. 1****.** In various embodiments of the apparatus **2,** it is configured to perform different methods according to the various aspects of the invention, which have been mentioned with respect to the method according to aspects of the invention.

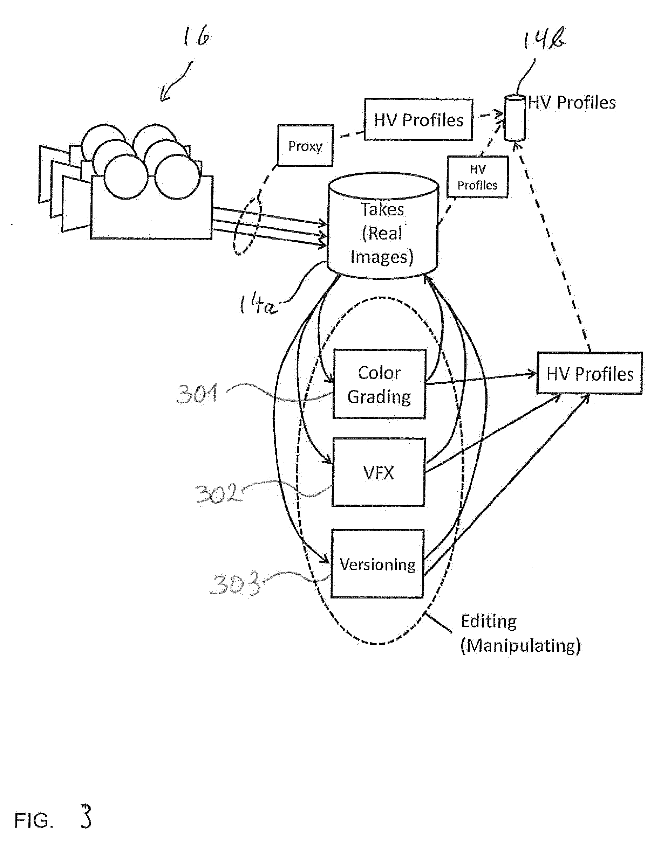

In **FIG. 3****,** there is a simplified scenario, in which the method and apparatus 2 are applicable.

A plurality of takes, represented schematically by a plurality of cameras **16,** is generated for example during the movie production. The takes are stored in a first database **14a.** During post-production or editing of the takes, various manipulations are performed. For example, there is color grading **301,** vfx **302** or versioning **303** of the original takes so as to generate for example various versions for cinema, Blu-ray or DVD. The post-processing also includes vfx manipulations (for example augmented reality). The results of these manipulations are also stored in the first database **14a.** For these various versions of the original takes, horizontal and vertical 1D projections, together named "HV profiles" in **FIG. 3****,** are generated. The HV profiles are stored in a second database **14b** as indicated by the dashed arrow. The first database 14a and the second database 14b shown in **FIG. 3** may actually be implemented in a single physical entity, for example in the database **14** of **FIG. 2****.** Furthermore, also for the various takes stored in the database **14a,** HV profiles are generated. These are also stored in the database **14b.** As an alternative concept, instead of being generated from the real images of the takes stored in the first database **14a,** the HV profiles can all be generated directly during scene capture, in particular by using so-called "proxies" which the cameras typically provide in parallel to real images. Proxies are versions having same scene content as gthe real images, but at reduced spatial or greylevel resolution. Proxies are intended for preview purposes. Summarizing, the HV profiles of the original takes and of the postproduction takes are collected in the database **14b.**

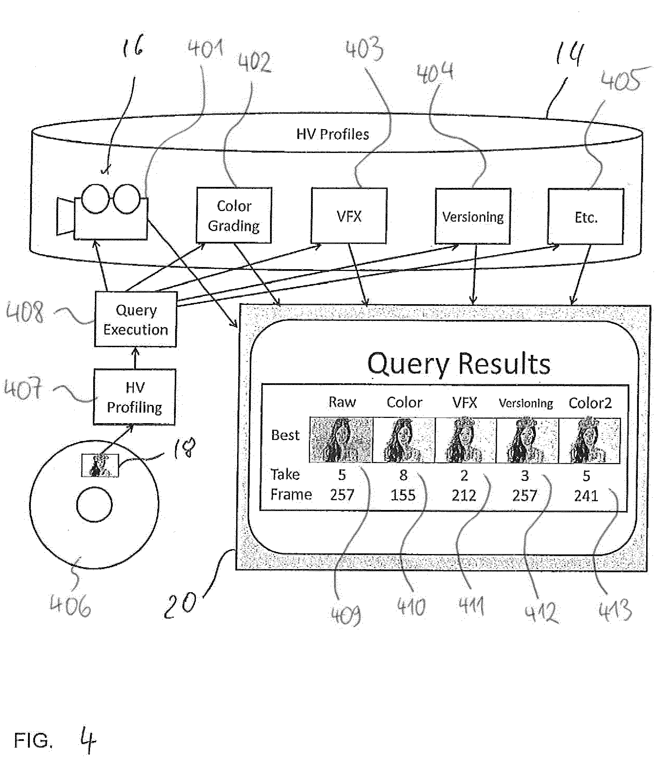

**FIG. 4** shows a simplified diagram illustrating the operation of an apparatus for finding, in a set of given images, a most similar one of the given images compared to a workpiece image. Images and their associated HV profiles are stored in a database **14.** In particular, the database **14** may comprise original images and their HV profiles sybolized by a camera **401,** it may comprise images and their associated HV profiles that are a result of color grading **402,** it may comprise images and their associated HV profiles that are a result of video effects processing commonly called VFX **403,** it may comprise images and their associated HV profiles that are a result of versioning **404,** or it may comprise images and their associated HV profiles that are a result of other operations **405.**

The apparatus is equipped and configured to load a workpiece image **18** for example from an external data carrier **406** and thereafter, to size rectify the workpiece image **18.** Next, the apparatus calculates horizontal and vertical projections of the workpiece image **18** in a unit symbolized as "HV Profiling" **407.**

The search process itself, denoted as "Query Execution" **408** in **FIG. 4****,** is performed by the apparatus. In particular it may be performed by a processing unit of the apparatus as shown in processing unit **12** of **FIG. 2****.** In other words, the HV profiles of the workpiece image **18** are compared to the various HV profiles in the database **14.**

The result of the query is displayed in a user interface **20** showing the best matches. This can be a raw image **409,** a color graded image **410,** a vfx version image **411,** a versioning image **412** or an image in a second color as symbolized as "Color2" **413.** The user is provided with valuable information, for example, in which take the image was found and the number or index or position of the particular image within the respective take is displayed.

The user may also advantageously be provided with information about the history of the manipulations. Within this context, other sources of information, which may be used to link the groups in the database, can be applied. Such links between the diverse groups may enhance the quality of the search results significantly. So if there is only one match detected, then automatically, the other versions of the same image can be displayed. This is particularly interesting when strong content changes are performed due to augmented reality in-prints.

With other words: Having found, for a workpiece image and employing the described projection based criteria, a best match in a sequence A, and knowing, e.g. from side information or metadata, that from sequence A, an augmented reality version with strong imprints had been generated and stored as sequence B, the system can then provide a best match candidate also from amongst the images of sequence B, even in cases where, due to strong imprints, the projection based criteria itself may fail.

## Claims

1. A method of finding, in a set of given images, a most similar one of the given images compared to a workpiece image **(18),** the method comprising the steps of:
- Inputting (101) the given images;
- Calculating (102) a horizontal and a vertical 1D projection from each of the inputted given images;
- Storing (103) the horizontal and the vertical 1D projections;
- Inputting (104) the workpiece image **(18);**
- Calculating (105) a horizontal and a vertical 1D projection from the inputted workpiece image **(18);**
- Comparing (107) the horizontal projection of the inputted workpiece image **(18)** to the horizontal projections of the inputted given images and comparing the vertical projection of the inputted workpiece image **(18)** to the vertical projections of the inputted given images;
- Selecting (108), bsased on the two comparisons, the most similar one of the given images as a best match.

2. The method according to claim 1, wherein the inputting (101, 104) of an image comprises resizing it if incoming images are known to have varying spatial dimension.

3. The method according to claim 1, wherein the calculation of the 1D projections (102, 105) of an image is performed based on luminance values of the pixels of the image.

4. The method according to claim 1, wherein comparing (107) the 1D projections of the workpiece image (18) to the 1D projections of the given images is performed based on cross-correlation criteria.

5. The method according to claim 4, wherein selecting (108) comprises finding a maximum of the best matches for the horizontal and vertical 1D projection, based on a cross-correlation magnitude criteria.

6. The method according to claim 1, wherein, for each of the 1D projections, an average value of the projection is calculated and said average value is subtracted from each element of the 1D projection.

7. The method according to claim 1, wherein the 1D projections are stored in a database, wherein, linked to each pair of horizontal and vertical 1D projections, the database contains a link to the image from which the 1D projections have been calculated, and where the link is used to present the selected image to a user.

8. The method according to claim 1, wherein the given images constitute a motion picture video and wherein for images that are part of a static scene, a single image of the sequence is assigned as a representative image of said scene, and wherein
- the horizontal and vertical 1D projection is derived from the representative image only, and/or
- a pair comprising the horizontal and the vertical 1D projection is sderived from the images of the static scene by averaging, and is linked to the representative image only, and/or
- the step of comparing is only performed for the representative image, while the remaining images of the sequence are skipped.

9. The method according to claim 7, wherein boundary images of the static scene are identified and if a best match is an image of the static scene, a matching distance of the workpiece image to the boundary images is determined and an image of the static scene having a similar ratio of distances to the boundary images is assigned the best match to said workpiece image.

10. The method according to claim 1, wherein, if the given images are from a slowly changing scene of a motion picture video, the step of comparing the projections of the workpiece image (18) to the projections of the given images is performed by summing up cross correlation values between a number of consecutive images from the workpiece sequence and the same number of consecutive images from the given sequence. A best match is identified by finding a maximum value of said sum.

11. An apparatus **(2)** for finding, in a set of given images, a most similar one of the given images compared to a workpiece image **(18),** the apparatus **(2)** comprising:
- a size rectifying unit **(10)** configured to rectify a size of the given images;
- a processing unit **(12)** configured to calculate a horizontal and a vertical 1D projection from each of the size-rectified given images,
- a database **(14)** for storing the horizontal and the vertical 1D projections, wherein
- the size rectifying unit **(10)** is further configured to rectify the size of the workpiece image **(18),**
- the processing unit **(12)** is further configured to
- calculate a horizontal and a vertical 1D projection from the size-rectified workpiece image **(18)**,
- compare the horizontal projection of the workpiece image **(18)** to the horizontal projections of the given images and compare the vertical projection of the workpiece image **(18)** to the vertical projections of the given images, and
- select the most similar one of the given images as a best match.
